# EUROPEAN PATENT APPLICATION

(11) **EP 1 394 386 A1**
(43) Date of publication of application: **03.03.2004**
(21) Application number: 03001964.0
(22) Date of filing: 30.01.2003
(51) Int. Cl.: F02C 3/16

(54) **Process for combusting fuels, in particular gas in an oxidizer of high temperature**

(30) Priority: 06.08.2002 PL 35536502; 07.11.2002 PL 35699502
(71) Applicant: Politechnika Slaska, 44-10 Gliwice (PL)
(72) Inventor: Szlek, Andrzej, 44-100 Gliwice (PL); Ryszard, Wilk, 44-100 Gliwice (PL); Weber, Roman, D-37520 Osterode am Harz (DE)
(74) Representative: König, Beate, Dipl.-Phys. Dr.

(57) **Abstract**

The process for combusting fuels, in particular natural gas, in an oxidizer of high temperature in a turbine consists in bringing fuel, particularly natural gas, to the oxidizer stepwise in the course of a gas expansion process, preferably with such a flow capacity that the obtained expansion work is equal to the amount of heat liberated due to fuel combustion, the temperature in the course of a whole expansion process remaining nearly constant. Fuel is supplied along the turbine shaft, and subsequently through the orifices inside the blades to the oxidizer in a directing space between blades.

## Description

The present invention relates to a process for combusting fuels, in particular gas, in an oxidizer of high temperature.

Combustion is a fundamental energy source in the present civilization, and is used among other things in plants for producing electrical energy. Efficiency of producing electrical energy in actually met cycles is from 35% for electric power stations in which water steam is used as working medium to more than 55% for modern steam-gas cycles of considerable complexity.

According to the second thermodynamic principle it is the Carnot cycle comprising two isothermal and two isentropic processes which has the highest possible efficiency at given temperatures of top and lower heat sources. In praxis, embodiment of the Carnot cycle makes serious difficulties due to problems associated with executing a device in which isothermal process occurs. Performing a process which approximates an isothermal one is possible through a multi-stage expansion with performing a cooling process between turbine stages (see Jan Szargut, Technical Thermodynamics, Publishing House of the Silesian Technical University, Gliwice, 1997, PL).

In prior cycles of gas turbines combustion occurred before expansion of exhaust gas, and hot combustion gas expanded in a turbine, a modern high-temperature turbine construction being provided with air cooling of blades. It is used also a multi-stage expansion with the aim to approximate an expansion process to isothermal one.

It is disclosed in the U.S. Patent No. 6033207 a process of combustion which consists in flowing an air-fuel mixture inside a pipe, and then passing it to a combustion zone in which combustion is exclusively resulting from a reaction or self-combustion. The combusted exhaust gas flows over an external surface of pipes and gives up the heat to an inlet gas flowing therethrough to pre-heat it.

The inventive process consists in bringing fuel, preferably natural gas, to the oxidizer stepwise in the course of the process of gas expansion, preferably with such a graded flow capacity that the obtained expansion work is equal to the amount of heat liberated due to fuel combustion.

Fuel is brought through orifices arranged along the shaft of the turbine rotor, and next through blade channels or orifices in the housing of turbine case into the oxidizer which is in a directing space between the blades, wherein flow capacity of the fuel flowing in successive turbine stages and blades is defined by a size and quantity of the orifices through which the fuel is brought into the directing space between blades.

The invention may be implemented in electric power stations and thermal-electric power stations provided with a gas turbine in which natural gas or fuel oil is used as fuel. The inventive process allows to considerably increase thermal efficiency compared with the cycles used till now. The inventive process requires to pre-heat the oxidizer to a temperature which is higher than the self-ignition temperature of fuel mixture, e.g. for a gas to a temperature higher than 900°C and for a fuel oil to a temperature about 500°C, whereby the problem of combustion stabilization does not occur. Thus, combustion is characteristic by a volume reaction which allows to place the combustion region inside the turbine in which combustion and expansion occur at the same time. At the fuel feeding capacity, suitably selected and distributed along the turbine, the temperature in the course of a whole expansion process is practically constant as the intensity of energy supplying due to combustion is equal to the intensity of energy carrying away due to gas expansion. Fuel may be brought into the combustion region, for example, through the blades of consecutive stages of the gas turbine in which the process of simultaneous combustion and expansion occurs.

It is preferable that the combustion gas of high temperature leaving the turbine is used to heat the oxidizer.

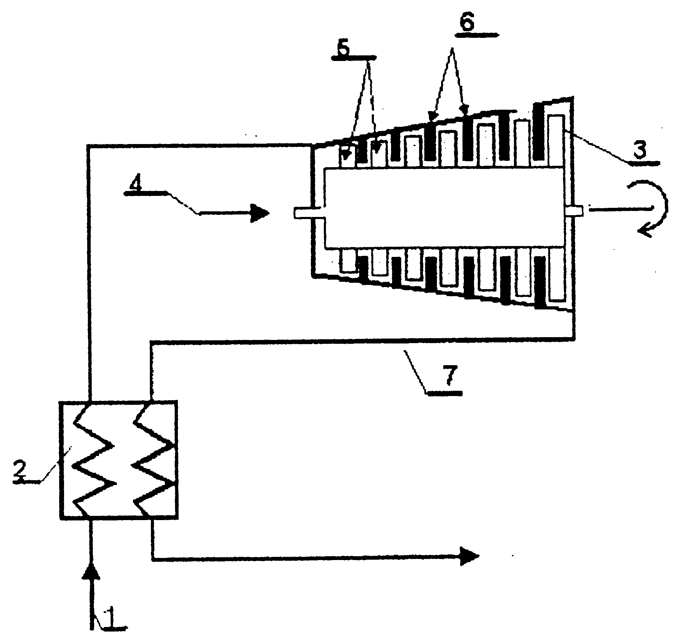

The inventive process will be now described with reference to the accompanying drawing which is a schematic view of the combustion process.

The compressed oxidizer 1 is heated in a regenerative heat exchanger 2 in such a manner that it has a temperature higher than that of gas self-ignition. Gas 4 is fed into the turbine 3 through the hollow shaft of a turbine rotor. Subsequently, this gas flows through the channels of turbine blades 5 arranged along the whole turbine length. Between individual rows of blades 5 there are arranged the guide rims 6. Expanded combustion gas 7 is used to heat the oxidizer 1, which results in its considerable cooling. Combustion occurs along the whole length of the turbine 3, between the rows of blades 5 and guides 6. Expansion work is recovered by the blades 5, and cross sections supplying the blades 5 with fuel are selected in such a manner that combustion and expansion efficiency causes equalizing a temperature along the whole turbine.

## Claims

1. Process for combusting fuels, in particular gas, in an oxidizer of high temperature in a turbine **characterized in that** the fuel, preferably natural gas, is supplied to the oxidizer stepwise in the course of a gas expansion process, preferably with such a graded flow capacity that the obtained expansion work is equal to the amount of heat liberated due to fuel combustion.

2. Process according to claim 1 **characterized in that** the fuel is supplied through orifices arranged along the shaft of a turbine rotor, and subsequently through blade channels or through orifices arranged in the housing of turbine case, to an oxidizer in a directing space between blades, flow capacity of fuel flowing in successive turbine stages and blades being defined by a size and quantity of orifices which bring fuel into the directing space between blades.
